Europäisches Patentamt

European Patent Office

Office européen des brevets

(19)

(11) Numéro de publication : **0 149 926**
**B1**

(12) **FASCICULE DE BREVET EUROPÉEN**

(45) Date de publication du fascicule du brevet :
09.09.87

(51) Int. Cl.⁴ : **B 65 G 57/06**, B 65 G 57/24

(21) Numéro de dépôt : 84400131.3

(22) Date de dépôt : 20.01.84

(54) **Machine de chargement automatique des palettes de manutention.**

(43) Date de publication de la demande :
31.07.85 Bulletin 85/31

(45) Mention de la délivrance du brevet :
09.09.87 Bulletin 87/37

(84) Etats contractants désignés :
AT BE CH DE GB IT LI LU NL SE

(56) Documents cités :
DE-A- 3 107 495
US-A- 3 130 839

(73) Titulaire : SAINT-HUBERT Industrie Laitière
870, rue Denis-Papin Zone Industrielle
F-54710 Ludres Meurthe-et-Moselle (FR)

(72) Inventeur : Kubler, Claude
457, rue Debussy
F-54710 Ludres (FR)
Inventeur : Berlemont, André
3bis, route de Mézières
F-54990 Xeuilley (FR)

(74) Mandataire : Chevallier, Robert Marie Georges
Cabinet BOETTCHER 23, rue La Boétie
F-75008 Paris (FR)

EP 0 149 926 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention a pour objet une machine qui sert à charger automatiquement des palettes de manutention en disposant sur celles-ci des couches successives superposées composées chacune de plusieurs rangs de paquets alignés.

Les chaînes d'emballage fournissent à leur sortie des paquets individuels qui se succèdent en ligne sur un transporteur. Il existe déjà des machines qui reçoivent d'un côté des palettes, soit une à une, soit en pile de plusieurs palettes, et d'un autre côté des paquets individuels qui arrivent un à un. Dans ces machines, plusieurs organes agissent pour constituer des rangs successifs de paquets, pousser ces rangs sur une plaque de réception en une couche qui en couvre toute la surface, transférer cette couche sur la palette, constituer une seconde couche et la transférer sur la première etc... jusqu'au niveau admissible le plus élevé.

Les paquets qui se succèdent arrivent sur un transporteur disposé le long d'un bord de la plaque de réception ; ils sont alignés sur ce transporteur en un rang continu et quand ce rang est complet, une barre de poussée se déplace pour faire glisser l'ensemble du rang sur la plaque. Quand celle-ci est couverte d'une couche complète comprenant plusieurs rangs, elle est déplacée jusqu'à ce qu'elle se trouve juste au-dessus de la palette puis elle revient pendant qu'une barre de retenue arrête les paquets qui tombent sur la palette. A chaque couche à transférer, la plaque qui sert au transfert est déplacée en sens vertical au niveau voulu pour que la nouvelle couche que porte la plaque de réception soit déposée, directement sur la palette ou sur la ou les couches déjà transférées sur celle-ci.

En général, les paquets sont disposés dans chaque rang avec une orientation déterminée qui est toujours la·même ou qui est la plus fréquemment adoptée. Cependant, il arrive que le garnissage le meilleur de la surface de la palette nécessite de donner aux paquets deux orientations différentes dans une même couche. Par exemple, dans tous les rangs sauf un les paquets sont disposés transversalement à la direction de ce rang et dans l'un des rangs, les paquets sont disposés longitudinalement, c'est-à-dire avec leur plus grande dimension mise dans le sens du rang. Il en découle que dans un tel rang le nombre des paquets est moins élevé que dans les autres rangs. Par exemple, dans les rangs à paquets orientés transversalement on peut compter neuf paquets tandis qu'un rang à paquets orientés longitudinalement ne contient que quatre paquets. Il est évident que ce rang à nombre réduit de paquets est constitué plus rapidement sur le transporteur, plus de deux fois plus vite dans le cas cité ici.

Les vitesses de déplacement des organes de la machine, et en particulier celle de la plaque de réception qui assure le transfert des couches entre le transporteur et la palette, sont fixées à leur valeur la plus élevée compatible avec la sécurité et sont en concordance les unes avec les autres dans le cadre des conditions de fonctionnement. Ainsi, la vitesse de déplacement de la plaque de réception est fixée à sa valeur la plus élevée en concordance avec le temps nécessaire à la préparation sur le transporteur d'un rang à neuf paquets transversaux. De cette façon, pendant qu'un tel rang se constitue pour devenir le premier rang d'une nouvelle couche, la plaque de réception a le temps de transférer sur la palette la couche précédente et de revenir à sa place le long du transporteur pour recevoir ce premier rang dès qu'il sera complet et poussé par la barre de poussée.

Quand il s'agit, comme premier rang, d'un rang à paquets longitudinaux, la plaque de réception n'a pas le temps de revenir à sa place avant que ce rang soit complet. La solution classique consiste à arrêter alors l'arrivée des paquets sur le transporteur jusqu'à ce que la plaque de réception soit revenue à sa position et que le premier rang à paquets longitudinaux puisse être poussé sur elle. Il en résulte un ralentissement de la cadence de travail de la machine quand une situation de ce genre se répète à chaque palette.

On connaît aussi par le document DE-A-3 107 495 une machine pour le chargement automatique de palettes à partir de paquets individuels disposés en rangs dans lesquels ces paquets peuvent être orientés transversalement ou longitudinalement ; cette machine constitue sur chaque palette des couches successives superposées composées chacune de plusieurs rangs de paquets alignés. A cette fin, elle comprend : un transporteur, dans laquelle les rangs constitués paquets, une plaque de réception déplaçable entre une position de chargement voisine du transporteur , dans laquelle les rangs constitués sur le transporteur sont transférés sur la plaque de réception, et une position de déchargement, dans laquelle les couches sont transférées sur la palette, une plage d'attente à surface dont les dimensions sont égales à celles de la palette et disposée sur un côté du transporteur entre celui-ci et la plaque de réception quand cette dernière occupe sa position de chargement et une barre de poussée commandée par des moyens appropriés pour pousser successivement chaque rang de paquets en dehors du transporteur.

Le ralentissement de la cadence de travail expliqué plus haut est supprimé selon l'invention, à partir de l'état de la technique reflété par le document cité ci-dessus et correspondant au préambule de la revendication 1, par le fait que ladite plage d'attente a une largeur sensiblement égale à celle d'un rang à paquets orientés longitudinalement dans ce rang cependant que les moyens de commande de la barre de poussée sont réglables pour donner à cette dernière soit une course normale déplaçant chaque rang de paquets directement du transporteur à la plaque de réception quand la plaque occupe sa position de chargement, soit une course réduite déplaçant le rang du transporteur à la plage d'attente quand la plaque de réception n'occupe pas sa position de chargement.

Dans une machine conforme à l'invention, le perfectionnemnt défini ci-dessus se combine avantageusement avec une barre de poussée escamotable pendant sa course de retour, ce qui procure la cadence de travail la plus élevée.

On donnera maintenant une description d'une machine conforme à l'invention. On se reportera aux dessins annexés dans lesquels :

la figure 1 est une vue en élévation d'une machine conforme à l'invention.

la figure 2 est une vue de dessus d'une partie de la machine de la figure 1.

Il n'est pas utile de décrire en détail une machine automatique de chargement des palettes qui est composée d'organes de base connus en soi, assemblée de façon connue. On décrira donc dans l'ensemble la structure générale de cette machine et en détail les parties concernées par l'invention.

A l'intérieur d'un portique 1 est disposée une traverse 2 et un chariot d'élévation des palettes déplaçable en sens vertical à l'aide d'un moteur 3 installé au sommet du portique. La traverse 2 porte un cadre horizontal 4 dans lequel est guidée et déplaçable une plaque de réception 5. Les moyens de guidage et d'entraînement en déplacement de la plaque 5 sont disposés dans des longerons creux 6 qui constituent les côtés longitudinaux du cadre 4 et qui s'étendent à travers le portique 1 de part et d'autre de ce dernier.

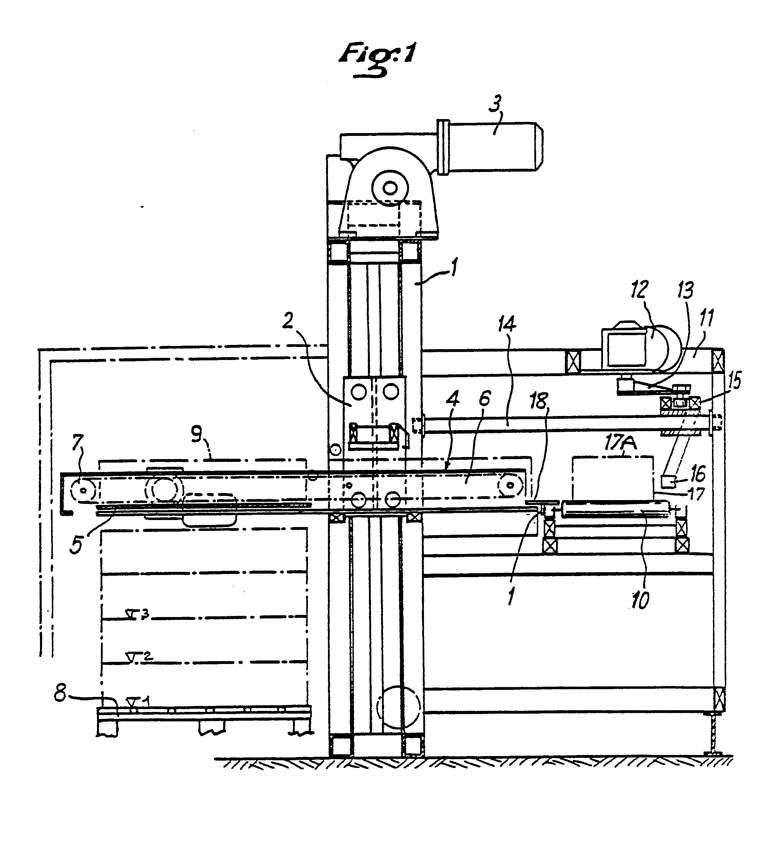

Sur un côté du portique 1, à gauche quand on regarde la figure 1, les longerons 6 sont réunis par un côté transversal 7 après une longueur suffisante et avec un écartement suffisant pour qu'une palette 8 à charger soit incluse dans le périmètre limité par la projection en plan de la traverse 2, des longerons 6, du côté transversal 7. Quand la plaque de réception 5 est située de ce côté du portique 1, elle se trouve à l'aplomb de la palette 8, au-dessus de celle-ci, à l'un quelconque de plusieurs niveaux marqué V1, V2, etc... sur la figure 1 qui correspondent aux niveaux successifs de chargement de la palette 8 en couches de paquets. Une couche 9 est représentée en trait mixte sur la figure 1 ; elle est portée par la plaque de réception 5 au niveau approprié.

Sur le côté opposé du portique 1, les longerons 6 s'étendent jusqu'au voisinage d'un transporteur 10 disposé parallèlement à ce portique et sur lequel arrivent un à un dans le sens indiqué par une flèche F des paquets qui composent une rangée. En réalité, le cadre 4 n'est pas fermé à proximité du transporteur 10 ou, tout au moins, il est construit pour que la plaque de réception 5 puisse venir se placer à proximité de ce transporteur 10, au même niveau que lui, afin que chaque rangée de paquets puisse y être transférée par un simple glissement. Les longerons 6 ont une longueur qui permet à la plaque de réception 5 de prendre cette seconde position dite de chargement sans empiéter sur l'emplacement de sa première position dite de déchargement décrite plus haut.

A partir du portique 1, à un niveau supérieur au transporteur 10 et à la partie voisine du cadre horizontal 4 sont installés des profilés 11 qui servent à supporter un groupe moteur 12 dont l'arbre est pourvu d'un bras pivotant 13. A un niveau moins élevé sont supportés aussi deux éléments de guidage 14, parallèles, espacés de la largeur du portique 1 et aboutissant à celui-ci. Entre ces deux éléments de guidage 14 est monté un pont glissant 15 accouplé à l'extrémité libre du bras pivotant 13.

Au pont glissant 15 est suspendue une barre de poussée 16 qui est disposée au niveau convenable, au-dessus du transporteur 1 pour faire glisser en les poussant des paquets qui constituent un rang 17 représenté en trait mixte sur le transporteur 1 de la figure 1. Cette barre de poussée 16 se trouve à sa position basse de poussée quand elle est en arrière du rang 17 par rapport à la plaque de réception 5, prête à pousser ce rang 17. Elle est capable de pousser ce dernier jusque sur la plaque de réception 5. Pendant sa course de retour, la barre de poussée 16 est escamotée ; autrement dit, elle est relevée à une hauteur qui lui permet de passer au-dessus du niveau de la face supérieure 17A du rang 17 de paquets. Le déplacement de la barre de poussée 16 à sa position d'escamotage est commandé pour qu'il se produise dès le début de la course de retour.

Une plage d'attente 18 est disposée sur le côté du transporteur 10, au niveau de la face supérieure de ce dernier. Cette plage 18 est constituée par exemple par une tôle allongée qui est soutenue par une cornière 19, ou par des équerres espacées qui sont elles-mêmes fixées au bâti du transporteur 10. La plage 18 a une largeur qui est égale sensiblement à la largeur des paquets, qui est aussi la largeur d'un rang de paquets orientés longitudinalement dans le sens de ce rang.

Quand la plaque de réception 5 est à sa position de chargement, elle se trouve contre la plaque d'attente 18 qui est alors interposée entre cette plaque et le transporteur 10.

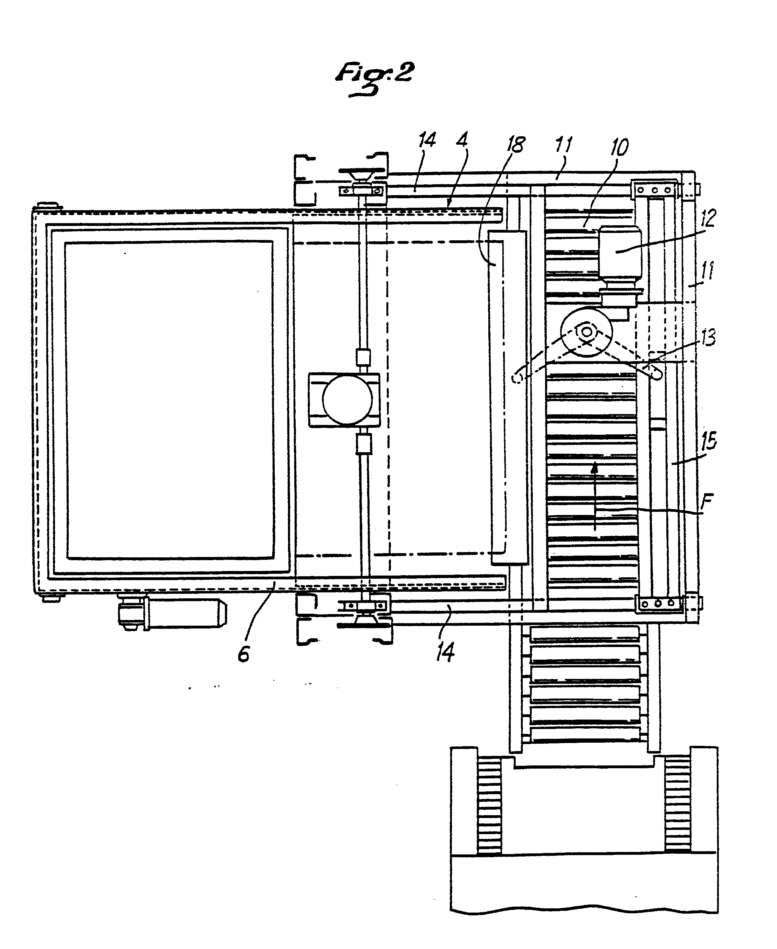

Le pont glissant 15 a une course de déplacement qui dépend de l'angle de pivotement du bras 13, ainsi qu'il est indiqué en trait mixte sur la figure 2, et qui est telle que la barre de poussée 16 pousse chaque rang 17 du transporteur 10 à la plaque de réception en lui faisant franchir la plage d'attente 18, quand il s'agit de rangs 17 à paquets transversaux. Quand il s'agit de rangs à paquets auxquels une orientation longitudinale a été donnée, la course du pont glissant 15, et par conséquent celle du bras de poussée 16, est réduite, par une réduction du déplacement angulaire du bras 13, pour que ce rang soit poussé seulement du transporteur 10 sur la plage d'attente 18. De cette façon, le transporteur 10 est dégagé et un nouveau rang peut s'y constituer, sans aucune interruption, pendant que la plaque de réception 5 termine sa course de retour. Le rang qui attend sur la plage d'attente 18 est poussé sur la plaque de réception 5 par le rang suivant qui est lui-même poussé par la barre de poussée 16. Celle-ci peut être déplacée par d'autres moyens connus que ceux qui ont été décrits plus haut. Il suffit que ces moyens soient réglables en amplitude de déplacement ou en course pour que l'on obtienne le résultat recherché.

## Revendications

1. Machine pour le chargement automatique de palettes à partir de paquets individuels qui constituent des rangs à paquets orientés transversalement ou orientés longitudinalement, les palettes étant chargées en disposant sur celles-ci des couches successives superposées composées chacune de plusieurs rangs (17) de paquets alignés, ladite machine comprenant un transporteur (10) où se constituent les rangs (17), une plaque de réception (5) où se constituent les couches, la plaque de réception (5) se déplaçant entre une position de chargement voisine du transporteur (10), dans laquelle les rangs constitués sur le transporteur sont transférés sur la plaque de réception (5), et une position de déchargement, dans laquelle les couches sont transférées sur la palette ; ladite machine comprenant une barre de poussée (16) commandée par des moyens appropriés (12, 13, 15) et apte à pousser chaque rang de paquets en dehors du transporteur (10) et une plage d'attente (18) disposée sur un côté du transporteur (10), la plage d'attente (18) se trouvant entre le transporteur (10) et la plaque de réception (5) quand celle-ci occupe sa position de chargement, caractérisée en ce que ladite plage d'attente (18) a une largeur sensiblement égale à celle d'un rang à paquets orientés longitudinalement dans ce rang cependant que les moyens de commande (12, 13, 15) de la barre de poussée (16) sont réglables pour donner à cette dernière soit une course normale déplaçant chaque rang de paquets directement du transporteur (10) à la plaque de réception (5) quand la plaque (5) occupe sa position de chargement, soit une course réduite déplaçant le rang du transporteur (10) à la plage d'attente (18) quand la plaque de réception (5) n'occupe pas sa position de chargement.

2. Machine selon la revendication 1, caractérisée en ce que la barre de poussée (16) est escamotable pendant sa course de retour et passe à un niveau supérieur à celui de la face supérieure des paquets.

## Claims

1. A machine for automatically loading pallets from individual packs which form rows with packs which are oriented transversely or longitudinally, the pallets being loaded by disposing thereon successive superposed layers each composed of a plurality of rows (17) of aligned packs, said machine comprising a transporter (10) where the rows (17) are formed, a receiving plate (5) where the layers are formed, the receiving plate (5) being displaceable between a loading position adjacent the transporter (10) in which the rows formed on the transporter are transferred on to the receiving plate (5), and an unloading position in which the layers are transferred on to the pallet ; said machine comprising a thrust bar (16) controlled by suitable means (12, 13, 15) and capable of pushing each row of packs outside of the transporter (10) and a waiting area (18) disposed on one side of the transporter (10), the waiting area (18) being between the transporter (10) and the receiving plate (5) when the latter is in its loading position, characterised in that said waiting area (18) is of a width substantially equal to that of a row comprising packs which are oriented longitudinally in said row while the means (12, 13, 15) for controlling the thrust bar (16) are adjustable to impart to the thrust bar either a normal travel for displacing each row of packs directly from the transporter (10) to the receiving plate (5) when the plate (5) is in its loading position, or a reduced travel for displacing the row from the transporter (10) to the waiting area (18) when the receiving plate (5) is not in its loading position.

2. A machine according to claim 1 characterised in that the thrust bar (16) is retractable during its return travel and passes at a level higher than that of the top face of the packs.

## Patentansprüche

1. Maschine zur automatischen Beladung von Paletten, ausgehend von einzelnen Paketen, die Reihen von Paketen bilden, die in Querrichtung oder in Längsrichtung verlaufen, wobei die Paletten beladen werden, indem auf ihnen aufeinanderfolgende übereinanderliegende Schichten aufgebracht werden, von denen jede aus mehreren Reihen (17) fluchtender Pakete besteht, und die Maschine einen Förderer (10) umfasst, wo sich die Reihen (17) bilden, sowie eine Aufnahmeplatte (5), wo die Schichten entstehen, und die Aufnahmeplatte (5) zwischen einer dem Förderer (10) benachbarten Ladestellung, in der die auf dem Förderer gebildeten Reihen auf die Aufnahmeplatte (5) überführt werden, und einer Entladestellung, in der die Schichten auf die Palette überführt werden, beweglich ist, und die Maschine eine Andruckstange (16) aufweist, die durch zugeordnete Einrichtungen (12, 13, 15) gesteuert wird und dazu dient, jede Reihe der Pakete vom Förderer (10) wegzustossen, sowie einen Wartebereich (18), der an einer Seite des Förderers (10) liegt und zwischen dem Förderer (10) und der Aufnahmeplatte (5) angeordnet ist, wenn letztere ihre Beladestellung einnimmt, dadurch gekennzeichnet, dass der Wartebereich (18) eine Breite aufweist, die im wesentlichen der Breite einer Reihe von Paketen entspricht, die in Längsrichtung in dieser Reihe angeordnet sind, während die Steuereinrichtungen (12, 13, 15) der Andruckstange (16) einstellbar sind, um der Andruckstange entweder eine normale Bewegungsbahn zu erteilen, bei der jede Reihe der Pakete unmittelbar vom Förderer (10) auf die Aufnahmeplatte (5) bewegt wird, wenn letztere ihre Beladestellung einnimmt, oder aber eine verkürzte Bewegungsbahn, bei welcher die Reihe vom Förderer (10) auf den Wartebereich (18) bewegt wird, wenn die Aufnahmeplatte (5) sich nicht in ihrer Beladestellung befindet.

2. Maschine nach Anspruch 1, dadurch gekennzeichnet, dass die Andruckstange (16) während ihrer Rückführbewegung einziehbar ist und sich auf einem Niveau bewegt, das höher als die Oberseite der Pakete liegt.

# Fig:1

# Fig.2